# EUROPEAN PATENT SPECIFICATION

(11) **EP 3 059 820 B1**
(45) Date of publication and mention of the grant of the patent: **30.05.2018**
(21) Application number: 15155855.8
(22) Date of filing: 20.02.2015
(51) Int. Cl.: H02G 3/12, H02G 3/08

(54) **Mounting box assembly**
Montagekastenanordnung
Ensemble de boîte de montage

(43) Date of publication of application: 24.08.2016
(73) Proprietor: ABB Schweiz AG, 5400 Baden (CH)
(72) Inventor: Andersson, Johan, 06100 Porvoo (FI); Tervo, Pekka, 06100 Porvoo (FI); Gustafsson, Victor, 06100 Porvoo (FI)
(74) Representative: Kolster Oy Ab

(56) References cited:
- WO-A1-01/54243
- DE-U1-202012 005 863
- JP-U- S5 456 800

## Description

### FIELD OF THE INVENTION

The present invention relates to a mounting box assembly.

A mounting box, or an installation box, is known in the art. A known mounting box comprises a box case defining a mounting space for accommodating an electrical component, and having a box opening for receiving the electrical component into the mounting space. The mounting box is adapted to be installed between a first wall element and a second wall element. Examples of known mounting box assemblies are described in publications DE 202012005863 and WO 01/54243.

An edge of the box opening is adapted to be flush with a first side of the first wall element. If thickness of the first wall element is less than a distance between the edge of the box opening and a first support surface of the mounting box one or more distance rings are required in a mounting box assembly between the first support surface and a second side of the first wall element.

A second support surface of the mounting box is adapted to be in contact with a first side of the second wall element. If a distance between the second side of the first wall element and the first side of the second wall element is greater than the distance between the first support surface and the second support surface of the mounting box one or more support rings are required in a mounting box assembly between the second support surface of the mounting box and the first side of the second wall element.

One of the disadvantages associated with the above known mounting box assembly is that in typical situations an electrician must have at least two support rings and at least one distance ring for each mounting box in order to be prepared for different thicknesses of the first wall element and different distances between the second side of the first wall element and the first side of the second wall element. Manufacturers of mounting boxes have taken the need for accessories into account by marketing a mounting box assembly which comprises a mounting box and a distance ring. If a first wall element is so thick that no distance ring is needed, an electrician has typically disposed of the excess distance ring thereby producing waste.

### BRIEF DESCRIPTION OF THE INVENTION

An object of the present invention is to provide a mounting box assembly so as to alleviate the above disadvantages.

The objects of the invention are achieved by a mounting box assembly which is characterized by what is stated in the independent claim. The preferred embodiments of the invention are disclosed in the dependent claims.

The invention is based on the idea of providing a fitting element usable both as a distance ring and a support ring. The fitting element is adapted to be attached to the mounting box in a first position in order to serve as a distance ring, and in a second position in order to serve as a support ring. A mounting box assembly according to the invention comprises a mounting box and at least one fitting element.

An advantage of the mounting box assembly of the invention is that an electrician needs fewer different components than before. Also, amount of waste can be reduced because an excess distance ring can easily be used as a support ring in some other project or vice versa.

### BRIEF DESCRIPTION OF THE DRAWINGS

In the following the invention will be described in greater detail by means of preferred embodiments with reference to the attached drawings, in which
Figure 1 shows a mounting box assembly according to an embodiment of the invention with a fitting element attached to a mounting box in a first position;
Figure 2 shows the mounting box of the mounting box assembly of Figure 1 as seen from lateral direction;
Figure 3 shows the fitting element of the mounting box assembly of Figure 1;
Figure 4 shows the fitting element of Figure 3 as seen from lateral direction;
Figure 5 shows a mounting box assembly in which the fitting element is attached to the mounting box in a second position;
Figure 6 shows a mounting box assembly comprising the mounting box of Figure 2 and three fitting elements of Figure 3; and
Figure 7 shows a mounting box assembly installed in a wall, the mounting box assembly comprising the mounting box of Figure 2 and two fitting elements of Figure 3.

### DETAILED DESCRIPTION OF THE INVENTION

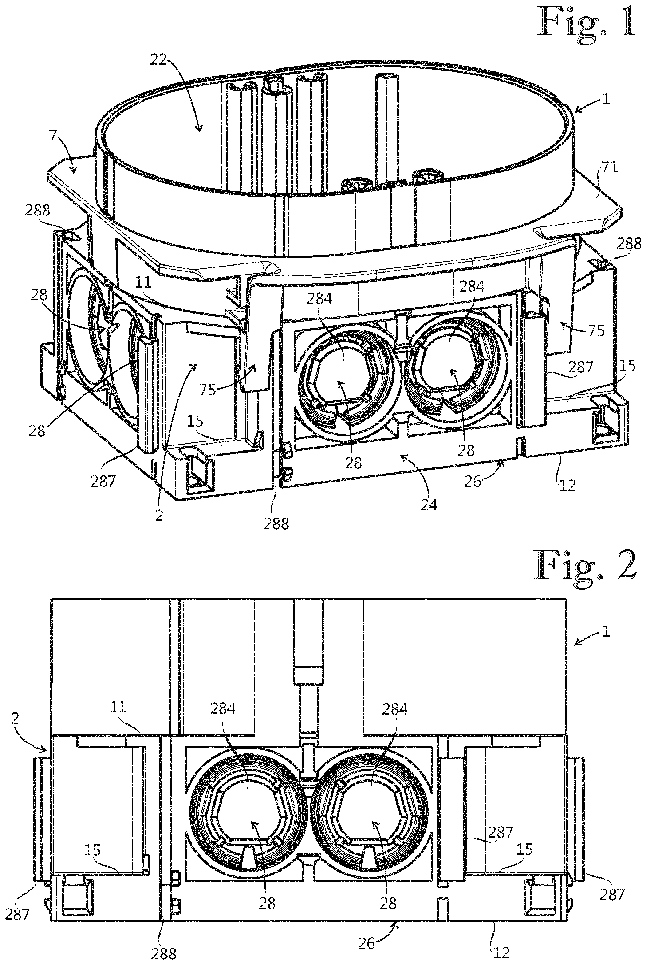

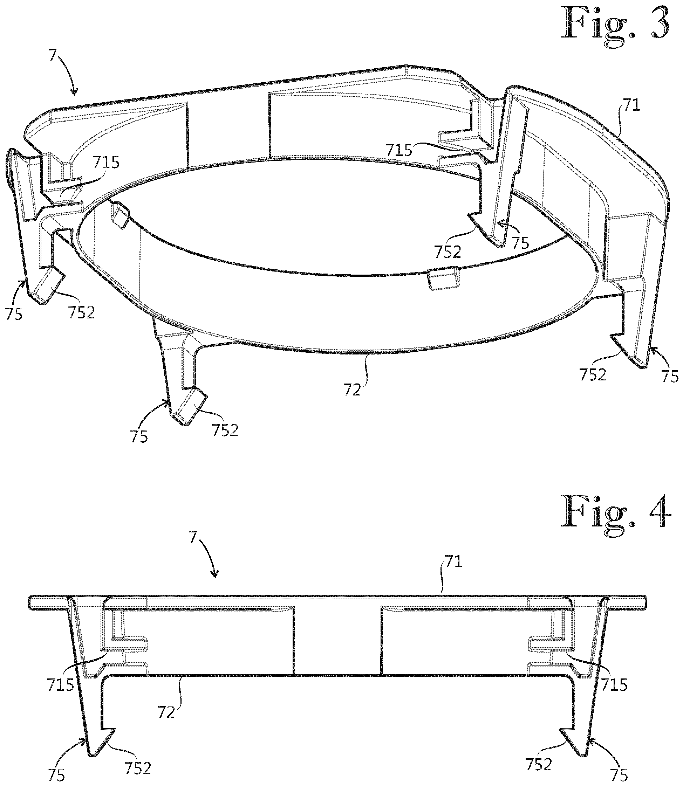

Figure 1 shows a mounting box assembly comprising a mounting box 1 and a fitting element 7 attached to the mounting box 1. Figure 2 shows the mounting box 1 from lateral direction without the fitting element. Figure 3 shows the fitting element 7 separately.

The mounting box 1 comprises a box case 2, a first support surface 11 and a second support surface 12. The box case 2 defines a mounting space inside thereof, the mounting space being adapted for accommodating an electrical component, such as a wall socket or a light switch. The box case 2 comprises a side wall 24 defining a lateral boundary of the mounting space, and a bottom wall 26 defining an axial boundary of the mounting space. The box case 2 has a box opening 22 for receiving the electrical component into the mounting space.

The first support surface 11 defines a first support plane located at a distance from the box opening 22 in an axial direction. In other words the first support plane is located at a distance from an edge of the box opening 22 in the axial direction. The axial direction is parallel to a normal vector of the first support plane. The first support surface 11 faces a first axial direction and is located laterally outside the box opening 22, i.e. outside the edge of the box opening. In Figure 2 the first support surface 11 faces upwards. The second support surface 12 defines a second support plane parallel to the first support plane.

The second support surface 12 faces a second axial direction opposite to the first axial direction. In Figure 2 the second support surface 12 faces downwards. The first support surface 11 is located between the box opening 22 and the second support surface 12 in the axial direction.

The edge of the box opening 22 defines a box plane that is parallel to the first support plane. The edge of the box opening 22 faces the first axial direction. In alternative embodiments an edge of the box opening does not define a box plane or the box plane is not parallel to the first support plane.

The side wall 24 comprises eight installation apertures 28 adapted to provide a passage for at least one electric wire between exterior of the box case 2 and the mounting space. The installation apertures 28 face in four different directions, an angle between two adjacent directions being 90°. In an alternative embodiment the side wall comprises at least one installation aperture.

Each installation aperture 28 is blocked by a removable shield plug 284. Each removable shield plug 284 is an integral part of the box case 2. Each removable shield plug 284 is adapted to be cut off in order to enable introducing of electric wires through corresponding installation aperture 28. Cutting off the removable shield plug 284 is easy since the removable shield plug 284 is only supported to rest of the box case 2 through narrow supporting members. In an embodiment the entire mounting box, including the shield plugs and the supporting members, is made of same plastic material. During installation of the mounting box an electrician removes one shield plug 284 or several shield plugs 284. The number of shield plugs removed depends on how many electric wires must pass through the side wall. If only one shield plug 284 is removed, the rest of the shield plugs protect the mounting space against dirt and foreign bodies.

The first support surface 11 and the second support surface 12 are integral parts of the box case. The second support surface 12 is formed by an external surface of the bottom wall 26.

The fitting element 7 of Figure 3 is adapted to be attached to the mounting box 1 of Figure 2. Figure 4 shows the fitting element of Figure 3 from lateral direction. The fitting element 7 comprises a first fitting surface 71 defining a first fitting plane, and a second fitting surface 72 defining a second fitting plane parallel to the first fitting plane and located at a distance from the first fitting plane. The second fitting surface 72 faces an opposite direction with relation to the first fitting surface 71. In Figure 4 the first fitting surface 71 faces upwards and the second fitting surface 72 faces downwards.

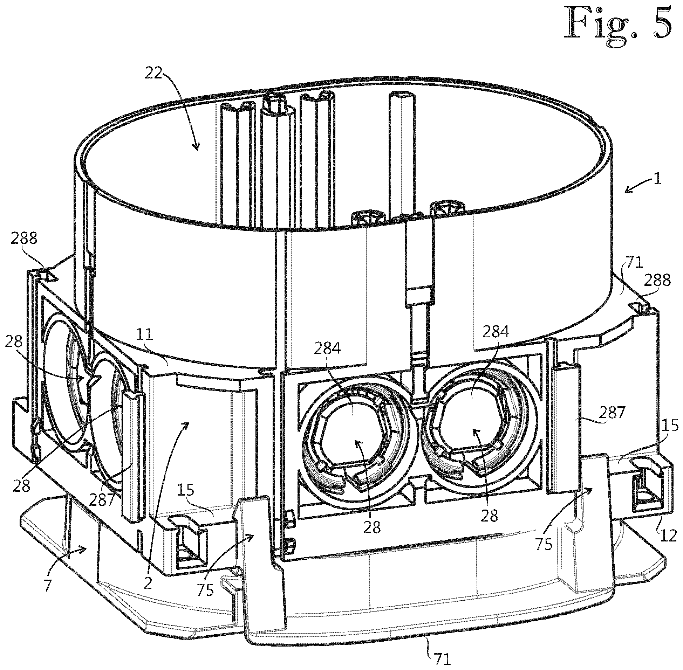

The fitting element 7 is adapted to be attached to the mounting box 1 in a first position and in a second position. In Figure 1 the fitting element 7 is attached to the mounting box 1 in the first position, and in Figure 5 the fitting element 7 is attached to the mounting box 1 in the second position. The fitting element 7 is also adapted to be attached to another identical fitting element in a stacked position such that the second fitting surface 72 of a first fitting element is in contact with the first fitting surface 71 of a second fitting element while the first fitting plane of the second fitting element is parallel to the second fitting plane of the first fitting element.

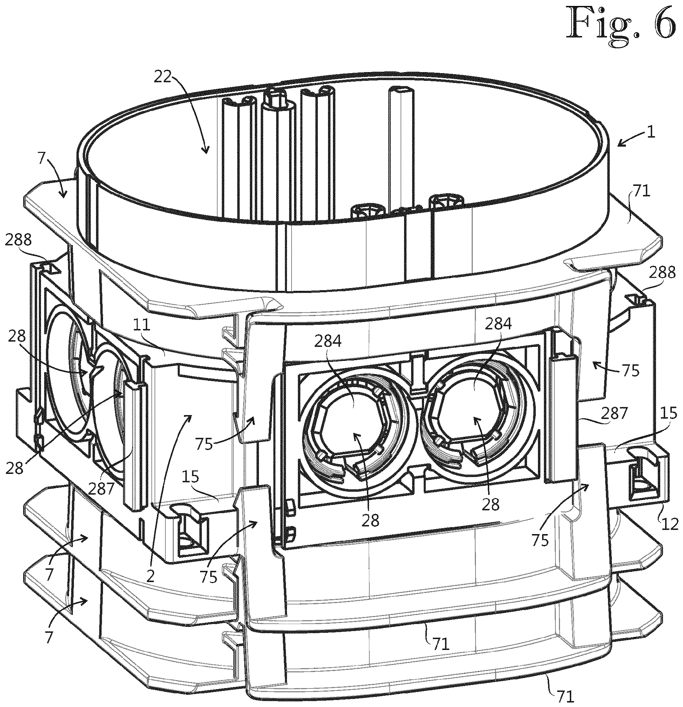

Figure 6 shows a mounting box assembly comprising the mounting box 1 of Figure 2 and three fitting elements 7 of Figure 3. One fitting element 7 is in the first position, another fitting element 7 is in the second position, and a third fitting element 7 is in a stacked position with relation to the fitting element 7 which is in the second position.

In the first position the second fitting surface 72 is in contact with the first support surface 11 while the first fitting surface 71 is located between the first support surface 11 and the box opening 22 in the axial direction, and the first fitting surface 71 is located laterally outside the box opening 22. In the second position the second fitting surface 72 is in contact with the second support surface 12 while the second fitting surface 72 is located between the first support surface 11 and the first fitting surface 71 in the axial direction.

A mounting box assembly according to the present invention comprises locking means for locking the fitting element to the second position, the locking means being adapted to prevent axial movement between the fitting element and the mounting box, and the locking means comprises at least one locking member in one of the fitting element and the mounting box, and a counterpart member for each of the at least one locking member in the other of the fitting element and the mounting box, each counterpart member being adapted to co-operate with corresponding locking member for providing the locking action. A mounting box assembly comprising a mounting box 1 of Figure 2 and a fitting element 7 of Figure 3 comprises locking means for locking the fitting element 7 to the second position. The locking means is adapted to prevent axial movement between the fitting element 7 and the mounting box 1. The locking means comprises four locking members 75 in the fitting element 7, and four counterpart members 15 in the mounting box 1. Locking members 75 are located at a distance from the second fitting surface 72 in the axial direction such that the second fitting surface 72 is between the first fitting surface 71 and the locking members 75. Each counterpart member 15 is adapted to co-operate with corresponding locking member 75 for providing the locking action.

Each of the locking members 75 is movable in lateral direction between a locking position and a release position, the lateral direction being parallel to the first fitting plane. In Figure 1 and in Figures 3 to 6 the locking members 75 are in their locking positions. A release position of each locking member 75 is located farther from the centre of the fitting element 7 than the locking position. Each locking member 75 is adapted to flexibly return to the locking position if the locking member 75 is deflected from the locking position towards the release position. The flexible return is provided by flexibility of the material of the fitting element. In an embodiment the fitting element is made of a flexible plastic material.

Each locking member 75 comprises a bevelled surface 752 adapted to co-operate with an outer surface of the mounting box 1 for moving the locking member 75 from the locking position to the release position when the fitting element 7 is moved towards the second position with relation to the mounting box 1. Each locking member 75 is adapted to automatically move from the locking position to the release position due to said co-operation. Due to the flexible return feature each locking member 75 is also adapted to automatically return to the locking position when the fitting element 7 reaches the second position.

The fitting element 7 comprises four locking counterpart members 715 each of which is adapted to co-operate with a locking member 75 of another identical fitting element 7 for locking one fitting element to another fitting element in the stacked position. The co-operation prevents axial movement between the stacked fitting elements. The bevelled surface 752 of a first fitting element is adapted to co-operate with the locking counterpart member 715 of a second fitting element for moving the locking member 75 having the bevelled surface 752 from the locking position to the release position when the fitting elements are moved towards the stacked position with relation to each other. Each locking member 75 is adapted to automatically move from the locking position to the release position due to said co-operation. Due to the flexibility of the locking members 75 each locking member of the first fitting element is adapted to automatically return to the locking position when the first fitting element reaches the stacked position with relation to the second fitting element.

In the embodiment in which the at least one locking member is in the mounting box, the mounting box is made of a flexible plastic material.

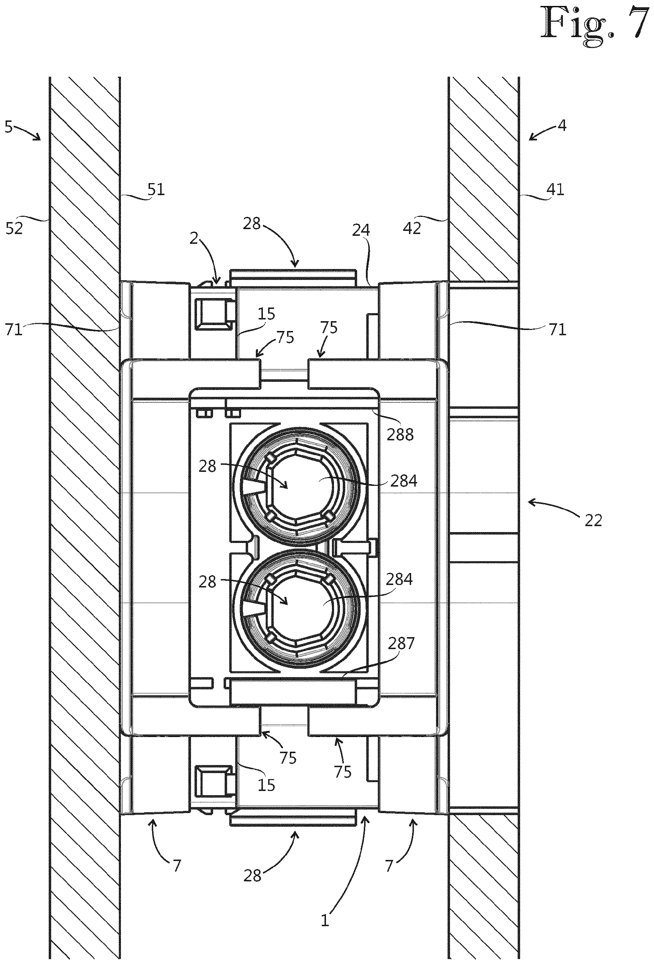

Figure 7 shows a mounting box assembly comprising the mounting box 1 and two fitting elements 7. The mounting box assembly is installed in a wall such that an edge of the box opening 22 is flush with a first side 41 of a first wall element 4. A first fitting element 7 is in the first position and a second first fitting element 7 is in a second position. The first fitting surface 71 of the first fitting element 7 is in contact with a second side 42 of the first wall element 4. The first fitting surface 71 of the second fitting element 7 is in contact with a first side 51 of a second wall element 5. The mounting box assembly is formed such that the installation apertures 28 are accessible despite one fitting element is attached to the first position and another fitting element is attached to the second position.

The mounting box 1 comprises connection means for connecting the mounting box 1 to an adjacent identical mounting box in a connected position in which the first support planes of the adjacent mounting boxes coincide. The connection means comprises projections 287 having a T-shaped cross section and slots 288 having a T-shaped cross section. The adjacent mounting boxes are connected by moving the mounting boxes axially with relation to each other. The connection means is adapted to prevent lateral movement between mounting boxes connected with the connection means. The connected position allows each of the connected mounting boxes to be provided with one fitting element 7 in the first position and another fitting element 7 in the second position.

The box case 2 has a base portion whose cross section is substantially a rectangle. The installation apertures 28 are located in the base portion. Electric wires may pass from one mounting box to adjacent one through the installation apertures 28 while the mounting boxes are connected to each other with the connection means.

Due to the form of the mounting box 1, a plurality of mounting boxes 1 can be connected side by side. For example, it is possible to form a cluster of nine mounting boxes comprising three columns of mounting boxes each column having three mounting boxes connected one after the other with the connection means, and the three columns being connected together with the connection means. The mounting box in the middle of the cluster is connected to four adjacent mounting boxes, and each of the rest of the mounting boxes is connected to two adjacent mounting boxes. Each mounting box of the cluster may be provided with a fitting element in the first position and another fitting element in the second position.

It will be obvious to a person skilled in the art that the inventive concept can be implemented in various ways. The invention and its embodiments are not limited to the examples described above but may vary within the scope of the claims.

## Claims

1. A mounting box assembly comprising a mounting box and at least one fitting element,
the mounting box (1) comprising:
a box case (2) defining a mounting space for accommodating an electrical component, and having a box opening (22) for receiving the electrical component into the mounting space;
a first support surface (11) defining a first support plane located at a distance from the box opening (22) in an axial direction parallel to a normal vector of the first support plane, the first support surface (11) facing a first axial direction and being located laterally outside the box opening (22); and
a second support surface (12) defining a second support plane parallel to the first support plane, the second support surface (12) facing a second axial direction opposite to the first axial direction, the first support surface (11) being located between the box opening (22) and the second support surface (12) in the axial direction,
each of the at least one fitting element (7) comprising:
a first fitting surface (71) defining a first fitting plane; and a second fitting surface (72) defining a second fitting plane parallel to the first fitting plane and located at a distance from the first fitting plane, the second fitting surface (72) facing opposite direction with relation to the first fitting surface (71),
the fitting element (7) being adapted to be attached to the mounting box (1) in a first position in which the second fitting surface (72) is in contact with the first support surface (11),
**characterized in that** while the fitting element is in the first position the first fitting surface (71) is located between the first support surface (11) and the box opening (22) in the axial direction, and the first fitting surface (71) is located laterally outside the box opening (22),
the fitting element (7) is adapted to be attached to the mounting box (1) in a second position in which the second fitting surface (72) is in contact with the second support surface (12) while the second fitting surface (72) is located between the first support surface (11) and the first fitting surface (71) in the axial direction,
the mounting box assembly comprises locking means for locking the fitting element (7) to the second position, the locking means being adapted to prevent axial movement between the fitting element (7) and the mounting box (1), and
the locking means comprises at least one locking member (75) in one of the fitting element (7) and the mounting box (1), and a counterpart member (15) for each of the at least one locking member (75) in the other of the fitting element (7) and the mounting box (1), each counterpart member (15) being adapted to co-operate with corresponding locking member (75) for providing the locking action.

2. A mounting box assembly according to claim 1, **characterized in that** the at least one locking member (75) is movable in lateral direction between a locking position and a release position, the lateral direction being parallel to the first fitting plane, the at least one locking member (75) being adapted to flexibly return to the locking position if the at least one locking member (75) is deflected from the locking position towards the release position.

3. A mounting box assembly according to claim 2, **characterized in that** the at least one locking member (75) is located in the fitting element (7).

4. A mounting box assembly according to claim 3, **characterized in that** the at least one locking member (75) comprises a bevelled surface (752) adapted to co-operate with an outer surface of the mounting box (1) for moving the at least one locking member (75) from the locking position to the release position when the fitting element (7) is moved towards the second position with relation to the mounting box (1).

5. A mounting box assembly according to claim 4, **characterized in that** each of the at least one fitting element (7) is adapted to be attached to another identical fitting element (7) in a stacked position in which the second fitting surface (72) of one fitting element is in contact with the first fitting surface (71) of the other fitting element while the first fitting plane of the other fitting element is parallel to the second fitting plane of the one fitting element.

6. A mounting box assembly according to claim 5, **characterized in that** each of the at least one fitting element (7) comprises at least one locking counterpart member (715) adapted to co-operate with the at least one locking member (75) of another identical fitting element (7) for locking one fitting element to another fitting element in the stacked position.

7. A mounting box assembly according to claim 6, **characterized in that** the locking counterpart member (715) of one fitting element is adapted to co-operate with the bevelled surface (752) of another fitting element for moving the locking member (75) having the bevelled surface (752) from the locking position to the release position when the fitting elements are moved towards the stacked position with relation to each other.

8. A mounting box assembly according to any one of claims 3 to 7, **characterized in that** the at least one locking member (75) is located at a distance from the second fitting surface (72) in the axial direction such that the second fitting surface (72) is between the first fitting surface (71) and the at least one locking member (75).

9. A mounting box assembly according to any preceding claim, **characterized in that** the box case (2) comprises a side wall (24) defining a lateral boundary of the mounting space, and a bottom wall (26) defining an axial boundary of the mounting space.

10. A mounting box assembly according to claim 9, **characterized in that** the side wall (24) comprises at least one installation aperture (28) adapted to provide a passage for at least one electric wire between exterior of the box case (2) and the mounting space, the mounting box assembly being formed such that the at least one installation aperture (28) is accessible irrespective of whether at least one fitting element (7) is attached to the first position and/or the second position.

11. A mounting box assembly according to any preceding claim, **characterized in that** the mounting box (1) comprises connection means for connecting the mounting box (1) to an adjacent identical mounting box (1) in a connected position which allows each of the connected mounting boxes to be provided with one fitting element (7) in the first position and another fitting element (7) in the second position.

12. A mounting box assembly according to any preceding claim, **characterized in that** an edge of the box opening (22) defines a box plane that is parallel to the first support plane.

## Patentansprüche

1. Montagekastenanordnung mit einem Montagekasten und mindestens einem Anschlusselement,
wobei der Montagekasten (1) aufweist:
ein Kastengehäuse (2), das einen Montageraum zur Aufnahme einer elektrischen Komponente bildet und eine Kastenöffnung (22) zur Aufnahme der elektrischen Komponente in dem Montageraum hat;
eine erste Haltefläche (11), die eine erste Trägerebene bildet, die mit Abstand zu der Kastenöffnung (22) in einer axialen Richtung parallel zum Normalenvektor der ersten Trägerebene angeordnet ist, wobei die erste Haltefläche (11) in eine erste axiale Richtung zeigt und lateral außerhalb der Kastenöffnung (22) angeordnet ist; und
eine zweite Haltefläche (12), die eine zweite Trägerebene parallel zu der ersten Trägerebene bildet, wobei die zweite Haltefläche (12) in eine zweite axiale Richtung zeigt, die entgegengesetzt zu der ersten axialen Richtung ist, wobei die erste Haltefläche (11) in der axialen Richtung zwischen der Kastenöffnung (22) und der zweiten Haltefläche (12) angeordnet ist,
wobei jedes des mindestens einen Anschlusselements (7) aufweist:
eine erste Anschlussfläche (71), die eine erste Anschlussebene bildet; und
eine zweite Anschlussfläche (72), die eine zweite Anschlussebene parallel zu der ersten Anschlussebene bildet und mit Abstand zu der ersten Anschlussebene angeordnet ist, wobei die zweite Anschlussfläche (72) in eine entgegengesetzte Richtung in Bezug auf die erste Anschlussfläche (71) zeigt,
wobei das Anschlusselement (7) ausgebildet ist, an dem Montagekasten (1) an einer ersten Position angebracht zu werden, an der die zweite Anschlussfläche (72) mit der ersten Haltefläche (11) in Kontakt ist,
**dadurch gekennzeichnet, dass**
wenn das Anschlusselement in der ersten Position ist, die erste Anschlussfläche (71) in der axialen Richtung zwischen der ersten Haltefläche (11) und der Kastenöffnung (22) angeordnet ist, und die erste Anschlussfläche (71) lateral außerhalb der Kastenöffnung (22) angeordnet ist,
das Anschlusselement (7) ausgebildet ist, an dem Montagekasten (1) an einer zweiten Position angebracht zu werden, in der die zweite Anschlussfläche (72) mit der zweiten Haltefläche (12) in Kontakt ist, wenn die zweite Anschlussfläche (72) in der axialen Richtung zwischen der ersten Haltefläche (11) und der ersten Anschlussfläche (71) angeordnet ist,
die Anschlusskastenanordnung eine Verriegelungseinrichtung zum Verriegeln des Anschlusselements (7) an der zweiten Position aufweist, wobei die Verriegelungseinrichtung ausgebildet ist, eine axiale Bewegung zwischen dem Anschlusselement (7) und dem Montagekasten (1) zu verhindern, und
die Verriegelungseinrichtung mindestens ein Verriegelungselement (75) in einer Komponente aus dem Anschlusselement (7) und dem Montagekasten (1) und ein komplementäres Element (15) für jedes des mindestens einen Verriegelungselements (75) in der entsprechenden anderen Komponente aus dem Anschlusselement (7) und dem Montagekasten (1) aufweist, wobei jedes komplementäre Element (15) ausgebildet ist, mit dem entsprechenden Verriegelungselement (75) zusammenzuwirken, um eine Verriegelungsfunktion bereitzustellen.

2. Montagekastenanordnung nach Anspruch 1, **dadurch gekennzeichnet, dass** das mindestens eine Verriegelungselement (75) in lateraler Richtung zwischen einer Verrieglungsposition und einer gelösten Position bewegbar ist, wobei die laterale Richtung parallel zu der ersten Anschlussebene liegt, und wobei das mindestens eine Verriegelungselement (75) ausgebildet ist, elastisch in die Verriegelungsposition zurückzukehren, wenn das mindestens eine Verriegelungselement (75) aus der Verriegelungsposition in die gelöste Position gebogen wird.

3. Montagekastenanordnung nach Anspruch 2, **dadurch gekennzeichnet, dass** das mindestens eine Verriegelungselement (75) in dem Anschlusselement (7) angeordnet ist.

4. Montagekastenanordnung nach Anspruch 3, **dadurch gekennzeichnet, dass** das mindestens eine Verriegelungselement (75) eine abgeschrägte Fläche (752) aufweist, die mit einer Außenfläche des Montagekastens (1) zusammenwirkt, um das mindestens eine Verriegelungselement (75) von der Verriegelungsposition zu der gelösten Position zu verschieben, wenn das Anschlusselement (7) in Richtung zu der zweiten Position in Bezug auf den Montagekasten (1) bewegt wird.

5. Montagekastenanordnung nach Anspruch 4, **dadurch gekennzeichnet, dass** jedes des mindestens einen Anschlusselements (7) ausgebildet ist, an einem weiteren identischen Anschlusselement (7) in einer gestapelten Stellung angebracht zu werden, in der die zweite Anschlussfläche (72) eines Anschlusselements mit der ersten Anschlussfläche (71) des anderen Anschlusselements in Kontakt ist, während die erste Anschlussebene des anderen Anschlusselements parallel zu der zweiten Anschlussebene des einen Anschlusselements ist.

6. Montagekastenanordnung nach Anspruch 5, **dadurch gekennzeichnet, dass** jedes des mindestens einen Anschlusselements (7) mindestens ein komplementäres Verriegelungselement (715) aufweist, das ausgebildet ist, mit dem mindestens einen Verriegelungselement (75) eines weiteren identischen Anschlusselements (7) so zusammenzuwirken, dass in der gestapelten Lage ein Anschlusselement mit einem weiteren Anschlusselement verriegelt ist.

7. Montagekastenanordnung nach Anspruch 6, **dadurch gekennzeichnet, dass** das komplementäre Verriegelungselement (715) eines Anschlusselements ausgebildet ist, mit der abgeschrägten Fläche (752) eines weiteren Anschlusselements so zusammenzuwirken, dass das Verriegelungselement (75) mit der abgeschrägten Fläche (752) von der Verriegelungsposition zu der gelösten Position bewegt wird, wenn die Anschlusselemente in Bezug zueinander in Richtung zu der gestapelten Lage bewegt werden.

8. Montagekastenanordnung nach einem der Ansprüche 3 bis 7, **dadurch gekennzeichnet, dass** das mindestens eine Verriegelungselement (75) in der axialen Richtung mit einem Abstand zu der zweiten Anschlussfläche (72) angeordnet ist derart, dass die zweite Anschlussfläche (72) zwischen der ersten Anschlussfläche (71) und dem mindestens einen Verriegelungselement (75) liegt.

9. Montagekastenanordnung nach einem der vorhergehenden Ansprüche, **dadurch gekennzeichnet, dass** das Kastengehäuse (2) eine Seitenwand (24), die eine seitliche Grenze des Montageraums bildet, und eine Bodenwand (26) aufweist, die eine axiale Grenze des Montageraums bildet.

10. Montagekastenanordnung nach Anspruch 9, **dadurch gekennzeichnet, dass** die Seitenwand (24) mindestens eine Installationsöffnung (28) aufweist, die geeignet ist, einen Durchgang für mindestens ein Elektrokabel zwischen dem Äußeren des Kastengehäuses (2) und dem Montageraum bereitzustellen, wobei die Montagekastenanordnung so ausgebildet ist, dass die mindestens eine Installationsöffnung (28) zugänglich ist unabhängig davon, ob mindestens ein Anschlusselement (7) an der ersten Position und/oder der zweiten Position angebracht ist.

11. Montagekastenanordnung nach einem der vorhergehenden Ansprüche, **dadurch gekennzeichnet, dass** der Montagekasten (1) eine Verbindungseinrichtung zum Verbinden des Montagekastens (1) mit einem benachbarten identischen Montagekasten (1) in einer verbundenen Stellung aufweist, wodurch es möglich ist, dass jeder der miteinander verbundenen Montagekästen mit einem Anschlusselement (7) in der ersten Position und einem weiteren Anschlusselement (7) in der zweiten Position versehen ist.

12. Montagekastenanordnung nach einem der vorhergehenden Ansprüche, **dadurch gekennzeichnet, dass** eine Kante der Kastenöffnung (22) eine Kastenebene bildet, die parallel zu der ersten Halteebene ist.

## Revendications

1. Assemblage de boîtier de montage comprenant un boîtier de montage et au moins un élément d'adaptation,
le boîtier de montage (1) comprenant :
un caisson de boîtier (2) définissant un espace de montage pour un accueil d'un composant électrique, et présentant une ouverture de boîtier (22) pour une réception du composant électrique dans l'espace de montage ;
une première surface de soutien (11) définissant un premier plan de soutien situé à une distance de l'ouverture de boîtier (22) dans une direction axiale parallèle à un vecteur normal du premier plan de soutien, la première surface de soutien (11) étant orientée dans une première direction axiale et étant située latéralement hors de l'ouverture de boîtier (22) ; et
une deuxième surface de soutien (12) définissant un deuxième plan de soutien parallèle au premier plan de soutien, la deuxième surface de soutien (12) étant orientée dans une deuxième direction axiale opposée à la première direction axiale, la première surface de soutien (11) étant située entre l'ouverture de boîtier (22) et la deuxième surface de soutien (12) dans la direction axiale,
chacun de l'au moins un élément d'adaptation (7) comprenant :
une première surface d'adaptation (71) définissant un premier plan d'adaptation ; et
une deuxième surface d'adaptation (72) définissant un deuxième plan d'adaptation parallèle au premier plan d'adaptation et située à une distance du premier plan d'adaptation, la deuxième surface d'adaptation (72) étant orienté dans la direction opposée par rapport à la première surface d'adaptation (71),
l'élément d'adaptation (7) étant adapté pour être rattaché au boîtier de montage (1) dans une première position dans laquelle la deuxième surface d'adaptation (72) est en contact avec la première surface de soutien (11),
**caractérisé en ce que** tandis que l'élément d'adaptation est dans la première position, la première surface d'adaptation (71) est située entre la première surface de soutien (11) et l'ouverture de boîtier (22) dans la direction axiale, et la première surface d'adaptation (71) est située latéralement hors de l'ouverture de boîtier (22),
l'élément d'adaptation (7) est adapté pour être rattaché au boîtier de montage (1) dans une deuxième position dans laquelle la deuxième surface d'adaptation (72) est en contact avec la deuxième surface de soutien (12) tandis que la deuxième surface d'adaptation (72) est située entre la première surface de soutien (11) et la première surface d'adaptation (71) dans la direction axiale,
l'assemblage de boîtier de montage comprend un moyen de verrouillage pour un verrouillage de l'élément d'adaptation (7) sur la deuxième position, le moyen de verrouillage étant adapté pour empêcher un mouvement axial entre l'élément d'adaptation (7) et le boîtier de montage (1), et
le moyen de verrouillage comprend au moins un élément de verrouillage (75) dans un de l'élément d'adaptation (7) et du boîtier de montage (1), et un élément de contrepartie (15) pour chacun de l'au moins un élément de verrouillage (75) dans l'autre de l'élément d'adaptation (7) et du boîtier de montage (1), chaque élément de contrepartie (15) étant adapté pour coopérer avec un élément de verrouillage (75) correspondant pour fournir l'action de verrouillage.

2. Un assemblage de boîtier de montage selon la revendication 1, **caractérisé en ce que** l'au moins un élément de verrouillage (75) est déplaçable dans une direction latérale entre une position de verrouillage et une position de libération, la direction latérale étant parallèle au premier plan d'adaptation, l'au moins un élément de verrouillage (75) étant
adapté pour revenir de manière flexible à la position de verrouillage si l'au moins un élément de verrouillage (75) est dévié de la position de verrouillage vers la position de libération.

3. Un assemblage de boîtier de montage selon la revendication 2, **caractérisé en ce que** l'au moins un élément de verrouillage (75) est situé dans l'élément d'adaptation (7).

4. Un assemblage de boîtier de montage selon la revendication 3, **caractérisé en ce que** l'au moins un élément de verrouillage (75) comprend une surface biseautée (752) adaptée pour coopérer avec une surface extérieure du boîtier de montage (1) pour un déplacement de l'au moins un élément de verrouillage (75) de la position de verrouillage vers la position de libération lorsque l'élément d'adaptation (7) est déplacé vers la deuxième position par rapport au boitier de montage (1).

5. Un assemblage de boîtier de montage selon la revendication 4, **caractérisé en ce que** chacun de l'au moins un élément d'adaptation (7) est adapté pour être rattaché à un autre élément d'adaptation (7) identique dans une position empilée dans laquelle la deuxième surface d'adaptation (72) d'un élément d'adaptation est en contact avec la première surface d'adaptation (71) de l'autre élément d'adaptation tandis que le premier plan d'adaptation de l'autre élément d'adaptation est parallèle au deuxième plan d'adaptation de l'un élément d'adaptation.

6. Un assemblage de boîtier de montage selon la revendication 5, **caractérisé en ce que** chacun de l'au moins un élément d'adaptation (7) comprend au moins un élément de contrepartie de verrouillage (715) adapté pour coopérer avec l'au moins un élément de verrouillage (75) d'un autre élément d'adaptation (7) identique pour le verrouillage d'un élément d'adaptation sur un autre élément d'adaptation dans la position empilée.

7. Un assemblage de boîtier de montage selon la revendication 6, **caractérisé en ce que** l'élément de contrepartie de verrouillage (715) d'un élément d'adaptation est adapté pour coopérer avec la surface biseauté (752) d'un autre élément d'adaptation pour un déplacement de l'élément de verrouillage (75) présentant une surface biseautée (752) de la position de verrouillage vers la position de libération lorsque les éléments d'adaptation sont déplacés vers la position empilée en relation l'un avec l'autre.

8. Un assemblage de boîtier de montage selon l'une quelconque des revendications 3 à 7, **caractérisé en ce que** l'au moins un élément de verrouillage (75) est situé à une distance de la deuxième surface d'adaptation (72) dans la direction axiale de sorte que la deuxième surface d'adaptation (72) se trouve entre la première surface d'adaptation (71) et l'au moins un élément de verrouillage (75).

9. Un assemblage de boîtier de montage selon l'une quelconque revendication précédente, **caractérisé en ce que** le caisson de boîtier (2) comprend une paroi latérale (24) définissant une limite latérale de l'espace de montage, et une paroi inférieure (26) définissant une limite axiale de l'espace de montage.

10. Un assemblage de boîtier de montage selon la revendication 9, **caractérisé en ce que** la paroi latérale (24) comprend au moins une ouverture d'installation (28) adaptée pour fournir un passage pour au moins un fil électrique entre un extérieur du caisson de boîtier (2) et l'espace de montage, l'assemblage de boitier de montage étant formé de sorte que l'au moins une ouverture d'installation (28) est accessible que l'au moins un élément d'adaptation (7) soit rattaché à la première position et/ou la deuxième position.

11. Un assemblage de boîtier de montage selon l'une quelconque revendication précédente, **caractérisé en ce que** le boîtier de montage (1) comprend un moyen pour une connexion du boîtier de montage (1) à un boîtier de montage (1) adjacent identique dans une position connectée qui permet à chacun des boîtiers de montage connectés d'être munis d'un élément d'adaptation (7) dans la première position et d'un autre élément d'adaptation (7) dans la deuxième position.

12. Un assemblage de boîtier de montage selon l'une quelconque revendication précédente, **caractérisé en ce qu'**une arête de l'ouverture de boîtier (22) définit un plan de boîtier qui est parallèle au premier plan de soutien.
